# EUROPÄISCHE PATENTSCHRIFT

(11) **EP 2 282 544 B1**
(45) Veröffentlichungstag und Bekanntmachung des Hinweises auf die Patenterteilung: **12.09.2018**
(21) Anmeldenummer: 10450122.6
(22) Anmeldetag: 23.07.2010
(51) Int. Cl.: G06K 9/20, H04N 19/85

(54) **Verfahren und Vorrichtung zur Reduktion von aufgezeichneten Bilddaten**
Method and device for compressing recorded image data
Procédé et dispositif de réduction de données d'images enregistrées

(30) Priorität: 03.08.2009 AT 12252009
(43) Veröffentlichungstag der Anmeldung: 09.02.2011
(73) Patentinhaber: AIT Austrian Institute of Technology GmbH, 1220 Wien (AT)
(72) Erfinder: Mayer, Konrad, 1230 Wien (AT); Brodersen, Jörg, 2553 Guntramsdorf (AT)
(74) Vertreter: Wildhack & Jellinek

(56) Entgegenhaltungen:
- US-A- 5 937 084
- US-A1- 2003 113 013
- US-A1- 2005 121 287
- US-A1- 2006 062 427
- US-A1- 2007 146 794

## Beschreibung

Die Erfindung betrifft ein Verfahren gemäß dem Oberbegriff des Anspruchs 1 sowie eine Vorrichtung gemäß dem Oberbegriff des Anspruchs 8.

Die Erfindung wird gewerblich auf dem Gebiet der automatisierten Überprüfung von Druckwerken, insbesondere von Banknoten, Verpackungsdruck, Briefmarken, Dokumenten und Wertpapieren, angewendet.

Das Dokument US 2003/113013 A1 (Hammadou T), veröffentlicht am 19. Juni 2003, offenbart ein Verfahren zur Reduktion von aufgezeichneten Bilddaten eines Digitalbilds mit mehreren Bildkanälen, die mit einer Sensoreinheit aufgenommen werden.

Aufgabe der Erfindung ist es, die enorme Menge von Bilddaten, die bei der Verwendung von hochauflösenden Zeilen- oder Flächenkameras bei der Erfassung von Gegenständen, insbesondere Druckwerken, entsteht, zu verringern und bei der Prüfung von Druckwerken lediglich diejenigen Daten zu erhalten, die für eine effiziente Prüfung des Gegenstands bzw. Druckwerks auf seine Echtheit und Brauchbarkeit erforderlich sind. Insofern sollte vor der eigentlichen Überprüfung eine Vorauswahl getroffen werden, welche die Menge der zu übertragenden bzw. später zu überprüfenden Daten verringert.

Zusätzlich besteht die Aufgabe, ein möglichst flexibles Verfahren bzw. eine möglichst flexible Vorrichtung zu schaffen, das bzw, die an die besonderen Ausgestaltungen der Oberfläche, betreffend sowohl deren Farbe als auch deren Struktur, der zu überprüfenden Gegenstände adaptierbar ist.

Die Erfindung löst die Aufgabe bei einem Verfahren mit dem Kennzeichen des Anspruchs 1 und bei einer Vorrichtung der eingangs genannten Art mit einem Kennzeichen des Anspruchs 8. Vorteilhafte Weiterbildungen der Erfindung sind in den Unteransprüchen beschrieben.

Erfindungsgemäß ist ein Verfahren zur Reduktion von aufgezeichneten Bilddaten eines Digitalbilds mit mehreren Bildkanälen, insbesondere Farbkanälen und/oder UV- bzw. Infrarotkanälen, von zu prüfenden Gegenständen, die mit einer Sensoreinheit aufgenommen werden, vorgesehen. Dabei wird nach Detektion eines Gegenstands im Aufnahmebereich der Sensoreinheit das aufgenommene Digitalbild des Gegenstands als sequentielles Signal am Ausgang der Sensoreinheit ausgegeben.

Das erfindungsgemäße Verfahren ist dadurch gekennzeichnet, dass vor Beginn des Verfahrens eine Anzahl von Fenstern in Bezug auf den jeweiligen Gegenstand vorgegeben wird. Der Zeilenwert und der Spaltenwert der übermittelten, insbesondere sequentiell vorliegenden, Bilddaten werden in Bezug auf das Digitalbild ermittelt. Es wird ermittelt und überprüft, ob sich der durch den Zeilenwert und den Spaltenwert festgelegte Bildpunkt innerhalb eines oder mehrerer der vorgegebenen Fenster befindet. Abhängig vom jeweiligen Fenster, in dem sich der jeweilige Bildpunkt befindet, wird ein vorgegebener Satz von Gewichten, gegebenenfalls auch ein Offset, herangezogen und ein Mischwert in Form einer mit den Gewichten gewichtete Summe der einlangenden Intensitätswerte der Bildkanäle gebildet. Für alle Bildpunkte werden innerhalb der Fenster die ermittelten gewichteten Mischwerte abgespeichert und zur weiteren Verarbeitung zur Verfügung gehalten.

Bei einem solchen Verfahren besteht der Vorteil, dass eine wirksame und deutliche Reduktion der relevanten Daten auf etwa ein Zehntel der eingehenden Datenmenge erfolgt. Zudem ermöglicht die erfindungsgemäße Aufbereitung der Bilddaten für eine Prüfung von Druckwerken, insbesondere von Banknoten, Verpackungsdruck, Briefmarken, Dokumenten und Wertpapieren, eine drastische Vereinfachung der Überprüfungsalgorithmen und somit geringere Anforderungen an die Überprüfungseinheit. Auf Grund der Gewichtung der Spektralkanäle kann eine verbesserte Aufnahme von Farbunterschieden erzielt werden.

Ein besonderer Aspekt der Erfindung sieht vor, dass unter den vorliegenden Fenstern eine Priorisierung vorgegeben wird. Bei Vorliegen eines Bildpunkts, der sich innerhalb des Überlappungsbereichs zweier Fenster befindet, wird jener Satz von Gewichten herangezogen, der demjenigen Fenster zugeordnet ist, das die höhere Priorität im Sinne der zuvor vorgegebenen Priorisierung aufweist.

Hierbei besteht der Vorteil, dass einzelne Bereiche unabhängig voneinander geprüft werden können und geometrische Einschränkungen der Prüfung weitestgehend vermieden werden. Zudem kann das Verfahren an einzelne Merkmale der zu überprüfenden Druckwerke angepasst werden und es können unterschiedliche Merkmale mit unterschiedlicher konkreter Form geprüft werden.

Ein weiterer Aspekt der Erfindung sieht vor, dass für jedes der Fenster ein Speicherbereich in einem Speicher reserviert wird und jeweils ein Zeiger auf den Anfang des Speicherbereichs gesetzt wird. Es wird der Zeiger desjenigen Fensters ausgewählt, das die höhere Priorität im Sinne der vorgegebenen Priorisierung aufweist. Der Mischwert wird an der Stelle des ausgewählten Zeigers abgespeichert. Dabei wird insbesondere eine Anzahl von periodisch wiederkehrenden Takten zum Auslesen des Speichers durch nachgeschaltete Einheiten freigeschaltet. In den übrigen Takten wird der Speicher beschrieben, wobei gegebenenfalls Mischwerte, die während der Freischaltung zum Lesen aufgenommen worden sind, zwischengespeichert werden. Im darauffolgenden Takt werden diese in den Speicher geschrieben.

Hierbei kann die ermittelte Datenmenge einfach an eine nachgeschaltete Überprüfungseinheit abgegeben werden, ohne den Speicher weiter zu belasten. Weiters besteht der Vorteil, dass die Steuerung des Auslesens von einer externen nachgeschalteten Überprüfungseinheit durch Polling erreicht werden kann, was insbesondere bei hohem Datenaufkommen die nachgeschaltete Einheit zusätzlich entlastet.

Ein besonderer Aspekt der Erfindung sieht vor, dass der gewichtete Mischwert mit der Formel s = offs + w_{R}.r + w_{G}.g + w_{b}.b ermittelt wird.

Hierdurch kann eine besonders einfache und effiziente Mischung der Farbwerte erreicht werden, mit der eine gute Unterscheidbarkeit von Kontrasten erzielbar ist.

Eine weitere Fortbildung der Erfindung sieht vor, dass ein Druckwerk aufgenommen wird und mit den aufgenommenen Daten das Digitalbild erstellt wird, wobei gegebenenfalls in einem Vorverarbeitungsschritt die Art des Druckwerks erkannt wird und abhängig von der Art des Druckwerks die Position der Fenster bzw. die den Fenstern zugeordneten Gewichte und der den Fenstern zugeordnete Offset der Bildkanäle gesetzt werden.

Dies ermöglicht die Anpassung der Prüfung an eine Vielzahl von unterschiedlichen Referenzdruckwerken.

Ferner kann die Erfindung dadurch weitergebildet werden, dass die Form der Fenster rechteckig vorgegeben wird oder dass für jedes Fenster die vom Fenster umfassten Pixel, beispielsweise als Liste, vorgegeben werden.

Hierdurch wird eine größere Flexibilität der zu überprüfenden geometrischen Strukturen erreicht.

Erfindungsgemäß ist eine Vorrichtung zur Reduktion von aufgezeichneten Bilddaten mit mehreren Bildkanälen, insbesondere Farbkanälen und/oder UV- bzw. Infrarotkanälen, von zu prüfenden Gegenständen, die mit einer Sensoreinheit aufgenommen werden, vorgesehen. Die Gegenstände werden an der Sensoreinheit vorbeibewegt, und die Bilddaten liegen sequentiell am Ausgang der Sensoreinheit an. Dabei liegen für jeden aufgenommenen Bildpunkt mehrere Intensitätswerte oder Farbwerte für unterschiedliche Wellenlängenbereiche in jeweils einem Bildkanal vor. Erfindungsgemäß ist vorgesehen, dass der Ausgang der Sensoreinheit einer Positionserkennungseinheit zugeführt ist, an deren Ausgang die Bildposition umfassend einen Zeilenwert und einen Spaltenwert der am Eingang anliegenden Bilddaten vorliegt. Die Vorrichtung umfasst einen Fenstergrenzenspeicher, der die Fenstergrenzen von vordefinierten Fenstern innerhalb des aufzuzeichnenden Bilds in elektronischer Form abgespeichert enthält. Die im Fenstergrenzenspeicher abgespeicherten Fenstergrenzen jeweils eines Fensters sowie die am Ausgang der Positionserkennungseinheit anliegenden Positionsdaten sind jeweils einer einem Fenster zugeordneten Fenstereinheit zugeführt. Die Fenstereinheiten überprüfen, ob die durch die Positionsdaten festgelegte Bildposition innerhalb der jeweiligen Fenstergrenzen des jeweiligen Fensters liegt. Die Vorrichtung umfasst ferner einen Gewichtsspeicher, in dem für jedes der Fenster sowie für jeden Bildkanal von Farbwerten ein Gewicht und gegebenenfalls noch ein konstanter Offset abgespeichert ist. Ferner umfasst die Vorrichtung eine Gewichtungseinheit, der die Gewichte desjenigen Fensters zugeführt sind, innerhalb dessen sich die festgestellte Bildposition befindet. Der Gewichtungseinheit sind die Kanäle von Farbwerten zugeführt. Am Ausgang der Gewichtungseinheit liegt ein gewichteter Mischwert an. Der Gewichtungseinheit ist ein Speicher nachgeschaltet.

Bei einer solchen Vorrichtung besteht der Vorteil, dass eine wirksame und deutliche Reduktion der relevanten Daten auf etwa ein Zehntel der eingehenden erreichbar ist. Ferner wird die Detektion einer derartigen Vorrichtung mit den kennzeichnenden Merkmalen der Erfindung erzielt, wobei zusätzlich die erforderliche Rechenzeit und die zur Datenübertragung benötigte Speicherbandbreite verringert wird.

Eine besondere Weiterbildung der Erfindung sieht vor, dass die Vorrichtung eine Priorisierungseinheit umfasst, der sämtliche Ausgänge der Fenstereinheiten zugeführt sind, wobei den vorliegenden Fenstern eine vorgegebene Priorisierung zugeordnet ist. Ein Fenstersignal liegt am Ausgang der Priorisierungseinheit an, das eine Kennung für das Fensters mit der höchsten Priorität unter den Fenstern, innerhalb deren sich die Bildposition befindet, enthält. Der Ausgang der Priorisierungseinheit ist zum Gewichtsspeicher geführt, und am Ausgang des Gewichtsspeichers liegen die Gewichte desjenigen Fensters an, das durch die Priorisierungseinheit vorgegeben ist.

Hierbei besteht der Vorteil, dass einzelne Bereiche unabhängig voneinander geprüft werden können und geometrische Einschränkungen der Prüfung weitestgehend vermieden werden. Zudem kann das Verfahren an einzelne Merkmale der zu überprüfenden Druckwerke angepasst werden und es können unterschiedliche Merkmale mit unterschiedlicher konkreter Form geprüft werden.

Ein weiterer Aspekt der Erfindung sieht vor, dass zwischen der Gewichtungseinheit und dem Speicher eine Arbitrierungseinheit zwischengeschaltet ist. Den Fenstereinheiten ist ein Adressspeicher nachgeschaltet, der für jedes Fenster einen Zeiger abspeichert und bei Vorliegen eines Fenstersignals an der Fenstereinheit den in ihm abgespeicherten dem jeweiligen Fenster zugeordneten Zeiger inkrementiert. Am Ausgang des Adressspeichers liegen die abgespeicherten den einzelnen Fenstern zugeordneten Zeiger an. Dem Adressspeicher ist ein Multiplexer nachgeschaltet, der mit dem von der Priorisierungseinheit erzeugten Priorisierungssignal gesteuert ist und den Zeiger an seinen Ausgang weiterleitet, dessen zugehöriges Fenster von der Priorisierungseinheit ausgewählt worden ist. Der Ausgang des Multiplexers ist der Arbitrierungseinheit zugeführt. Es ist eine Steuereinheit vorgesehen ist, die der Arbitrierungseinheit vorgeschaltet ist, wobei die Steuereinheit ein periodisches Signal abgibt, mittels dessen sie die Arbitrierungseinheit in periodisch wiederkehrenden Takten in einen Schreibzustand sowie einen Lesezustand bringt. Die Arbitrierungseinheit schreibt im Schreibzustand die am Ausgang der Gewichtungseinheit anliegenden Mischwerte auf diejenige Adresse des Speichers, die durch die am Ausgang des Multiplexers anliegenden Adressdaten festgelegt ist. Im Lesezustand ermöglicht sie einen Zugriff von externen Einheiten auf den Speicher, wobei sie die anliegenden Mischwerte gegebenenfalls zwischenspeichert und in einem darauffolgenden Takt im Speicher ablegt.

Diese Weiterbildung der Erfindung ermöglicht eine besonders schnelle Übertragung der Daten an die nachgeschalteten Datenverarbeitungseinheiten sowie eine effiziente Datenhaltung.

Die Erfindung wird beispielhaft anhand der folgenden Zeichnungen nicht einschränkend beschrieben.
Fig. 1 zeigt schematisch die Verteilung von Fenstern auf dem Bild eines Druckwerks.
Fig. 2 zeigt eine erfindungsgemäße Vorrichtung zur Aufnahme und Weiterleitung der in den einzelnen Fenstern ermittelten Daten.
Fig. 3 zeigt ein Timing-Diagramm bei der sequentiellen Aufnahme von Druckwerken.

Im dargestellten Beispiel wird ein Druckwerk, nämlich eine Banknote, an einer Sensoreinheit 3 in Form eines Zeilensensors, vorbeibewegt. Der Zeilensensor nimmt dabei Zeilenbilder mit einer Anzahl von etwa 1000 bis 10000 Pixel auf. Jedem der Pixel sind dabei jeweils drei Farbwerte, jeweils ein Farbwert für rot, grün und blau, zugeordnet.

Zu vorgegebenen Zeitpunkten werden vom Zeilensensor Zeilenbilder erzeugt. Zwischen zwei aufeinanderfolgenden Zeitpunkten liegen je nach erforderlicher Auflösung und Transportgeschwindigkeit etwa 1 bis 50 µs. Wird die Banknote durch den Aufnahmebereich des Zeilensensors, etwa mittels eines Transportbands, bewegt, werden von der gesamten Banknote Zeilenbilder aufgenommen, die anschließend zu einem Gesamtbild des Gegenstands zusammengesetzt.

Das Gesamtbild weist allerdings auf Grund der sehr großen Anzahl von Zeilenbildern und auf Grund der großen Anzahl von Pixeln pro Zeilenbild einen großen Speicherbedarf auf, zusätzlich muss das aufgenommene Bild auch an eine nachgeschaltete Überprüfungseinheit übermittelt werden. Da diese Überprüfungseinheit nur eine begrenzte Bandbreite an eingehenden Bilddaten aufnehmen kann, werden erfindungsgemäß von den aufgenommenen Bilddaten lediglich einzelne rechteckige Ausschnitte, im folgenden Fenster genannt, zu einem Vergleich mit hoher Auflösung herangezogen, während die übrigen Bereiche lediglich mit verringerter Auflösung weitergeleitet werden. Zusätzlich werden die einzelnen Helligkeitswerte für rot, grün und blau nicht unmittelbar weitergeleitet, sondern es wird lediglich eine Linearkombination dieser Helligkeitswerte pixelweise ermittelt und weitergeleitet, womit die Daten reduziert werden.

Die Fenster werden dabei vor der Aufnahme der Banknoten in Bezug auf die Banknote vorgegeben und werden so gelegt, dass sie besondere Sicherheitsmerkmale der einzelnen Banknoten abdecken. Dabei ermöglicht eine besondere Ausgestaltung der Erfindung, dass eine große Anzahl unterschiedlicher Druckwerke rasch untersucht werden kann. Nachdem das Druckwerk aufgenommen worden ist, gelangen die aufgenommenen Bilddaten zu einer nicht dargestellten Vorerkennungseinheit, die das aufgenommene Druckwerk auf Grund vorgegebener Merkmale einer Art von Druckwerk zuordnet. Eine erfindungsgemäße Vorrichtung umfasst beispielsweise eine derartige Vorerkennungseinheit, die mit Verfahren gemäß dem Stand der Technik eine Unterscheidung vornimmt, welche Art von Druckwerk eingelesen worden ist. Die Vorerkennungseinheit weist einen Speicher auf, der für jede Art von Druckwerk vorgegebene Einstellungen vornimmt. Diese Einstellung betrifft die weiter unten erwähnten Gewichte sowie die ebenfalls weiter unten erwähnten und beschriebenen Fenster, die für jede Art von Druckwerk gesondert festgelegt werden können.

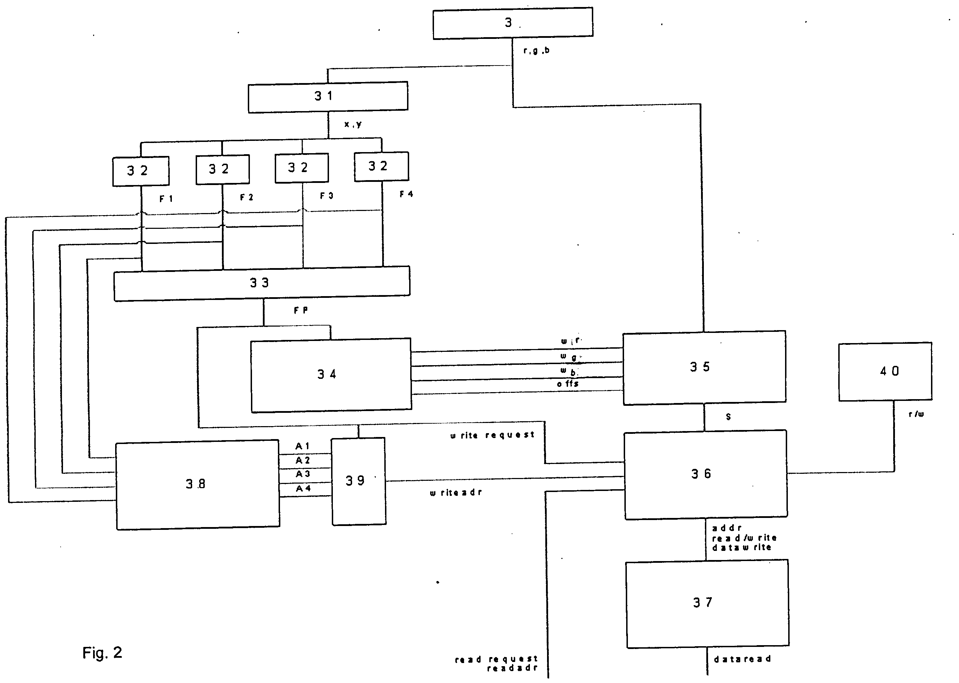

Im vorliegenden Verfahren werden durch eine in Fig. 2 dargestellte Sensoreinheit 3 Bilddaten aufgenommen und diese Bilddaten als Datenstrom am Ausgang der Sensoreinheit 3 abgegeben. Das von der Sensoreinheit 3 abgegebene Signal weist nach dem Abschluss der Aufnahme einer Zeile sowie dem Abschluss der Aufnahme des gesamten Bildes, eine diesbezügliche Kennung auf.

Diese Kennungen werden von einer Positionserkennungseinheit 31 detektiert, wobei die Positionserkennungseinheit 31 ferner die jeweilige Position der momentan aufgenommenen Helligkeitswerte im aufgenommenen Bild 1 bestimmt. Zu diesem Zweck umfasst die Positionserkennungseinheit 31 zwei rücksetzbare Zähler, nämlich einen Zeilenzähler sowie einen Spaltenzähler. Werden die drei Helligkeitswerte für ein Pixel, jeweils einer für rot, grün und blau, im Datenstrom detektiert, wird anschließend der Spaltenzähler inkrementiert. Nachdem eine Zeilenende-Kennung bei der Positionserkennungseinheit 31 einiangt, wird der Spaltenzähler rückgesetzt und der Zeilenzähler um 1 erhöht. Liegt ein Signal vor, das das Vorliegen eines neuen Bildes indiziert, werden beide Zähler, nämlich sowohl der Spaltenzähler, als auch der Zeilenzähler rückgesetzt. Die Werte der beiden Zähler liegen am Ausgang der der Sensoreinheit 3 nachgeschalteten Positionserkennungseinheit 31 an und werden im Folgenden als Zeilenwert x und Spaltenwert y bezeichnet.

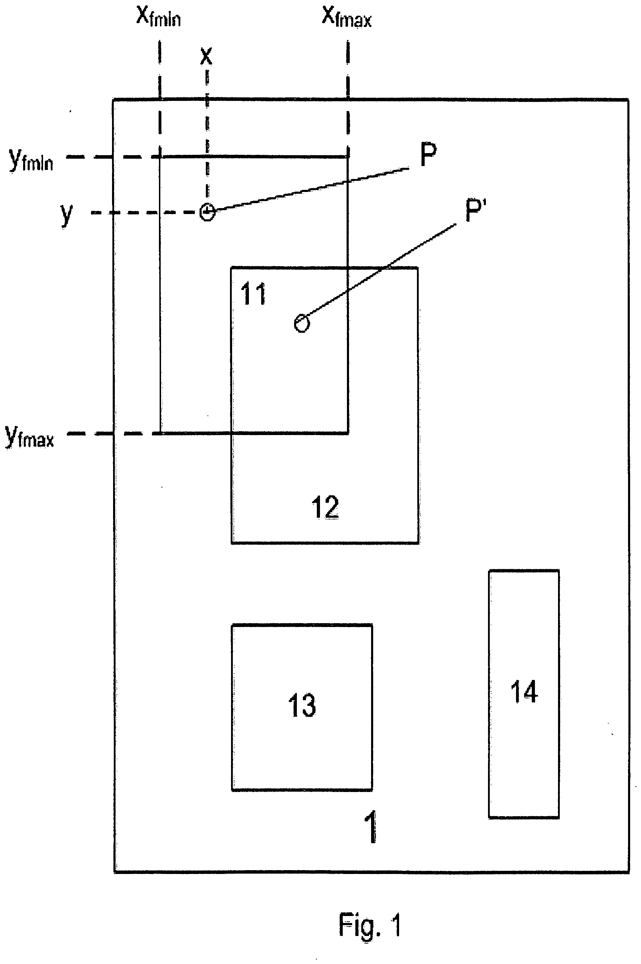

Der Zeilenwert x und der Spaltenwert y werden einer Anzahl von der Positionserkennungseinheit 31 nachgeschalteten Fenstereinheiten 32 zugeführt. Jede dieser Fenstereinheiten 32 enthält dabei jeweils sowohl den Zeilenwert x als auch den Spaltenwert y zugeführt. Jede der Fenstereinheiten 32 ist dabei jeweils einem der in Fig. 1 dargestellten Fenster 11, 12, 13, 14 zugeordnet und überprüft, ob sich der durch den Zeilen- bzw. Spaltenwert x, y dargestellte Bildpunkt P innerhalb des jeweiligen Fensters 11, 12, 13, 14 befindet. Dabei sind in den einzelnen Fenstereinheiten 32 jeweils die Positionskoordinaten des linken oberen bzw. des rechten unteren Ecks der Fenster abgespeichert. Diese Fenstergrenzen werden im Folgenden als XFmin, XFmax, YFmin und YFmax bezeichnet und sind in Fig. 1 für das Fenster 11 dargestellt. Es wird nun überprüft, ob sich der Spaltenwert x zwischen den horizontalen Begrenzungen XFmin, XFmax des jeweiligen Fensters 11, 12, 13, 14 befindet. Analog wird verglichen, ob sich der Zeilenwert y zwischen den Fenstergrenzen YFmin, YFmax des jeweiligen Fensters 11, 12, 13, 14 befindet. Wird durch den Vergleich festgestellt, dass der Punkt, dargestellt durch den Zeilenwert Y bzw. den Spaltenwert X, tatsächlich innerhalb eines Fensters befindet, gibt die jeweilige Fenstereinheit 32 an ihrem Ausgang ein diesbezügliches Fenstersignal F1, F2, F3, F4 ab.

Eine weitere alternative Möglichkeit bei der Festlegung von Fenstern besteht darin, dass eine von der rechteckigen Form abweichende Form vorgegeben werden kann. Jeder der Fenstereinheiten 32 wird beispielsweise eine Liste von Koordinaten vorgegeben, die dem jeweiligen Fenster zugehören. Die Fenstereinheit 32 vergleicht, ob sich das momentan eingelesene Pixel bzw. dessen zugehöriges Koordinatenpaar, umfassend den Zeilenwert X, und den Spaltenwert Y, innerhalb der vorgegebenen Liste befindet und gibt abhängig davon ein entsprechendes Fenstersignal F1, F2, F3, F4 ab.

Es ist im Rahmen der Erfindung keineswegs ausgeschlossen, dass einige der Fenster einander gegenseitig überlappen. Dies ist insbesondere dann erforderlich, wenn zu überprüfende Strukturen sehr nahe beieinander liegen und von einer zu den Zeilen bzw. zu den Spalten parallel ausgerichtete Rechtecke aufweisenden Form abweichen. Für Punkte P', die im Überlappungsbereich zweier Fenster liegen, wird eine Priorisierung der Fenster vorgegeben, wobei die Farbwerte, wie im folgenden noch beschrieben wird, nur mit den Vorgaben für das Fenster weiterverarbeitet werden, das die höchste Priorität aufweist. Jedem Fenster wird eine eindeutige Kennung zugewiesen.

Die einzelnen Fenstersignale werden einer Priorisierungseiheit 33 zugeführt, die die Kennung des am höchsten priorisierten Fensters angibt, innerhalb dessen sich der Bildpunkt P befindet. Liegt, wie in Fig. 1 dargestellt, ein Punkt P' sowohl im Fenster 11 als auch im Fenster 12, wird durch die Priorisierungseinheit das Fenster festgelegt. Ausschließlich diejenigen Fenster werden einer Priorisierung unterzogen, innerhalb derer sich der Punkt P', dargestellt durch den Zeilenwert y bzw. den Spaltenwert x, tatsächlich befindet. Am Ausgang der Priorisierungseinheit 33 liegt eine Kennung für das Fenster F_{P} an, das unter den den Punkt P' umfassenden Fenstern die höchste Priorität hat. Befindet sich der Punkt P' innerhalb keines einzigen der vorgegebenen Fenster, weist das Signal eine diesbezügliche Kennung auf.

Das am Ausgang der Priorisierungseinheit 33 anliegende Signal bezeichnet das Fenster F_{P} und ist dem Eingang einer Gewichtsauswahleinheit 34 zugeführt. Diese Gewichtsauswahleinheit 34 weist einen internen Datenspeicher auf, der für jedes Fenster einen Satz von Gewichten für jeden einzelnen der Farbkanäle sowie einen zusätzlichen Offset aufweist. Durch das Signal am Ausgang der Priorisierungseinheit wird für das Fenster F_{P} mit der höchsten Priorität der jeweilige Satz Gewichte bzw. der zugehörige Offset bestimmt und an den Ausgang der Gewichtsauswahleinheit 34 weitergeleitet. Die Gewichtsauswahleinheit 34 ist hierbei vorteilhafterweise als eine Mehrzahl von Multiplexern ausgebildet, an deren Auswahleingang das Priorisierungssignal F_{P} angeschlossen ist. Am Ausgang der Gewichtsauswahleinheit liegen die Gewichte wr, wg, wb bzw. Koeffizienten für die einzelnen Farben sowie ein Offset offs an.

Die Gewichte für die einzelnen Farben sowie der Offset offs sind einer Gewichtungseinheit 35 zugeführt. Ferner ist dieser Gewichtungseinheit 35 auch das Ausgangssignal der Sensoreinheit 3 zugeführt. Für jedes von der Sensoreinheit 3 aufgenommene Pixel langt somit an der Gewichtungseinheit 35 ein Vektor von Farbwerten r, g, b ein. Für jeden dieser Farbwerte r, g, b liegt ein eigenes Gewicht am Eingang der Gewichtungseinheit vor. Mittels der Formel s = offs + w_{R}.r + w_{G}.g + w_{b}.b wird ein gewichteter Mischwert s für das jeweilige Pixel bestimmt und an den Ausgang der Gewichtungseinheit 35 weitergeleitet. Damit erfolgt eine weitere Datenreduktion.

Wie bereits erwähnt, können die einzelnen Gewichte für die unterschiedlichen Fenster 11, 12, 13, 14 unterschiedlich gewählt werden, um die in den Fenstern befindlichen Strukturen besser hervorheben zu können. Dies wäre z.B. dann erforderlich, wenn die Strukturen innerhalb des Fensters 13 ausschließlich rote und grüne Bildbestandteile aufweisen. Hier kann eine Gewichtung derart vorgenommen werden, dass rote Farbwerte mit einem negativen Gewicht, beispielsweise wᵣ = -1 und grüne Farbwerte mit einem positiven Gewicht, beispielsweise w_{g} = +1 bewertet werden. Der Offset offs kann dabei zugewählt werden, dass sich die zu erwartenden Werte innerhalb vorgegebener Schranken befinden. Innerhalb des Fensters 13 können somit rote Bereiche von grünen Bereichen lediglich aufgrund eines einzelnen gewichteten Mischwerts s gut voneinander unterschieden werden. Der blaue Helligkeitswert b im Bereich dieser Pixel wird in diesem Fall, beispielsweise aufgrund seiner Bedeutungslosigkeit für das Endergebnis, mit Null multipliziert, d.h. verworfen. Analog kann das Vorgehen bei den übrigen Fenstern 11, 12, 14 gewählt werden, wobei hier jeweils andere Farben für das Endergebnis besonders relevant sein können.

Dieses Verfahren funktioniert insbesondere gut bei Druckwerken, bei denen die verfeinert zu prüfenden Flächen in bestimmten Bereichen des Drucks lokalisiert sind. In den meisten Fällen reicht es auch aus, lediglich einen einzigen bestimmten gewichteten Mischwert der einzelnen Intensitätswerte der Farbkanäle zu bilden, um festzustellen, ob ein fehlerfreier Druck vorliegt. Für den Banknotendruck ist es typisch, dass es Bereiche gibt, wo jeweils ein bestimmter Farbton vorherrscht. Es ist daher nicht notwendig, die volle durch den Sensor aufgenommene Spektralinformation abzuspeichern und weiterzuleiten, sondern es genügt, eine für diesen Farbton spezifische Wahl von Gewichtungsparametern zur Ermittlung der Mischwerte vorzunehmen.

Eine Banknote kann eine Banknotennummer in rotem Druck auf blauem Hintergrund haben. Wenn es nur auf die Auswertung einer aufgedruckten Ziffernfolge ankommt, kann durch geeignete Wahl der Gewichtungsparameter die Differenz von Rot und Blau als in dem Fenster abzuspeichernder Wert herangezogen werden. In einer anderen Bildregion könnte es hingegen wichtig sein, den Kontrastwert von anderen Farbtönen abzuspeichern.

Ein derartiges Vorgehen funktioniert bei allen Bildmotiven, bei denen nicht der gesamte Farbraum ausgenutzt wird, sondern bei denen die Farbvektoren in den einzelnen Regionen des Druckwerks annähernd auf einer Geraden liegen. Dies ist nicht nur bei Banknoten der Fall, sondern etwa auch typisch bei Verpackungsdruck und bei Briefmarken-, Dokumenten- und Wertpapierdruck.

Der Priorisierungseinheit 33 ist eine Arbitrierungseinheit 36 nachgeschaltet, der das Priorisierungssignal F_{P} zugeführt ist. Über das Priorisierungssignal F_{P} aus der Priorisierungseinheit 33 erhält eine Arbitrierungseinheit 36 eine Schreibanfrage (write request).
Ferner ist ein Adressspeicher 38 vorgesehen, dem die einzelnen Fenstersignale F1, F2, F3, F4 zugeführt sind. Der Adressspeicher 38 weist in der vorliegenden Konfiguration vier Speicherplätze für jeweils einen Zeiger auf, der eine Speicheradresse im Speicher 37 bezeichnet. Am Ausgang des Adressspeichers 38 liegen die abgespeicherten Zeiger an und sind einem Multiplexer 39 zugeführt. Zu Beginn des Aufnahmevorgangs werden die einzelnen Zeiger des Adressspeichers 38 auf einen vorgegebenen Wert gesetzt, wobei auf Grund der Größe der einzelnen Fenster 11, 12, 13, 14 festgelegt werden kann, wie groß der Abstand zwischen den Anfangswerten der Zeiger zumindest sein muss, um ein gegenseitiges Überschreiben der einzelnen Speicherstellen auszuschließen. Weist beispielsweise das erste Fenster 11 eine Größe von 100 Pixeln auf, kann vorgesehen werden, dass der erste Zeiger mit null initialisiert wird, der zweite Zeiger mit 100. Dadurch wird ein Überschreiben vermieden, da das erste Fenster maximal 100 Einträge aufweist. Analog kann mit den weiteren Fenstern vorgegangen werden, wobei die Anfangsadresse jedes Zeigers der Summe der aufgezeichneten Bilddaten aller vorangegangenen Fenster entspricht.

Liegt ein Fenstersignal F1, F2, F3, F4 am Eingang des Adressspeichers 38 an, wird der jeweils zugehörige Zeiger um eins erhöht. Dabei kann es bei überlappenden Fenstern durchaus vorkommen, dass zwei Zeiger gleichzeitig erhöht werden. Alle Zeiger werden dem Multiplexer 39 zugeführt. Dieser Multipliexer 39 erhält das Priorisierungssignal F_{P}, wählt den Zeiger des priorisierten Fensters aus und gibt diesen an seinem Ausgang ab.

Das Priorisierungssignal und der am Multiplexer 39 anliegende Zeiger werden der Arbeitrierungseinheit 36 zugeführt. Zusätzlich erhält die Arbitrierungseinheit 36 von einer Steuereinheit 40 ein periodisches Zeitsignal r/w zugeführt, das angibt, ob im jeweiligen Takt aus dem Speicher 37 gelesen oder in den Speicher 37 geschrieben werden soll. Das Verhältnis zwischen den Takten, in denen in den Speicher geschrieben wird, und den Takten, in denen aus dem Speicher gelesen wird, ist im vorliegenden Beispiel 3:1.

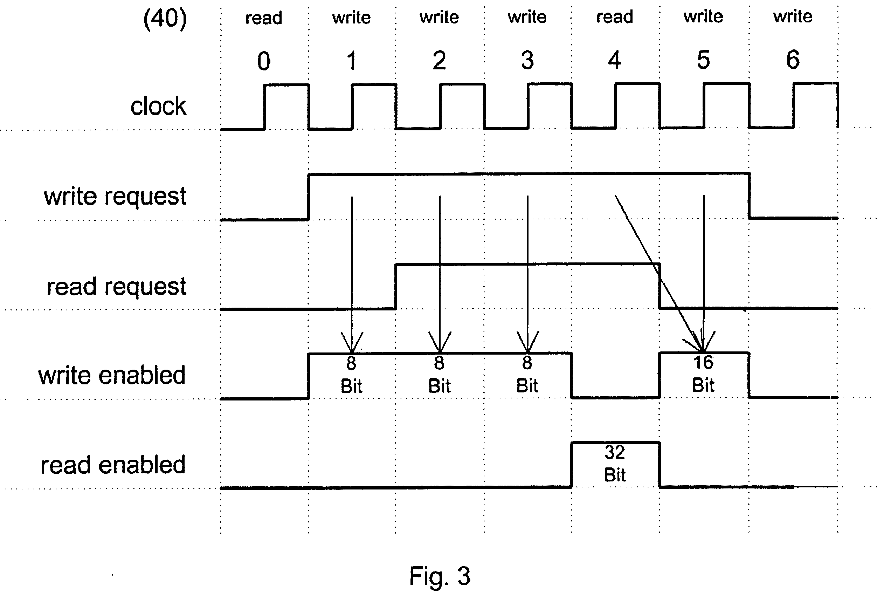

Liefert die Steuereinheit 40 den Befehl, in den Speicher 37 zu schreiben, d. h. einen Schreibbefehl, so wird sofort der Wert s in den Speicher 37 geschrieben. In der Fig. 3 ist das für die Takte 1,2 und 3 der Fall. Liefert die Steuereinheit 40 den Befehl, aus dem Speicher 37 zu lesen, d. h. einen Lesebefehl, wird der an der Gewichtungseinheit 35 anliegende Mischwert s in einem Zwischenspeicher der Arbitrierungseinheit 36 gepuffert. Gleichzeitig werden bei Vorhandensein einer der Arbitrierungseinheit 36 zugeführten externen Leseanfrage (read request) bis zu 4 Werte aus dem Speicher 37 gelesen und ausgegeben, wie in Fig. 3 im Takt 4 dargestellt. Liegt im Takt 4 keine externe Leseanfrage vor, wird im Takt 4 weder gelesen noch geschrieben. Im darauffolgenden Takt, in dem die Steuereinheit einen Schreibbefehl absetzt, in Fig. 3 beispielsweise Takt 5, besteht die Möglichkeit, dass am Ausgang der Gewichtungseinheit ein neuer Mischwert s anliegt. Ist dies der Fall, werden sowohl der zwischengespeicherte Mischwert, der während des Lesebefehls ermittelt worden ist, als auch der im aktuellen Takt aufgenommene Mischwert s gemeinsam geschrieben, wie in Fig. 3 dargestellt. In diesem Fall werden gleichzeitig 8+8 Bit in den Speicher 37 übertragen. Folgt kein neuer Wert, wird nur der zwischengespeicherte Mischwert in den Speicher 37 geschrieben.

Für diese Art der Ansteuerung muss der Speicher 37 mindestens zwei Mischwerte gleichzeitig schreiben und mindestens vier Mischwerte gleichzeitig lesen können. Stateof-the-art Speicher erfüllen derartige Anforderungen durch sogenannte Byte-Enables.

Nachdem nur aufeinanderfolgende Werte des gleichen Fensters, in Fig. 3 ist dies Takt 5, in den Speicher 37 geschrieben werden können, müssen die Fenster eine Breite mit einem Vielfachen von 2 aufweisen: Fenster starten daher immer innerhalb eines Zeilenbildes an einer geraden und enden an einer ungeraden Position (Zählweise bei 0 startend).

Die Farbtiefe bzw. die Quantisierung des gewichteten Mischwerts s ist typischerweise auf 8 oder 16 Bit festgelegt. Üblicherweise weisen Speicher eine Datenwortbreite von 32 bis 128 Bit auf.

Ein weiterer Aspekt der Erfindung besteht darin, dass eine Vielzahl von erfindungsgemäßen Einheiten an eine gemeinsame Auswerteeinheit angeschlossen ist. Aus diesem Grund ist vorgesehen, dass zur Verminderung der Überlastung der Auswerteeinheit diese Auswerteeinheit den Datentransfer regelt und die Daten mittels eines Polling-Mechanismus von der jeweiligen Anordnung abfragt. Dies hat insbesondere die Auswirkung, dass für die einzelnen erfindungsgemäßen Anordnungen die Länge der Ausleseperioden nicht unmittelbar vorherbestimmbar ist und somit ein gewisser zeitlicher Spielraum einkalkuliert werden sollte.

## Patentansprüche

1. Verfahren zur Reduktion von aufgezeichneten Bilddaten eines Digitalbilds mit mehreren Bildkanälen von zu prüfenden Gegenständen, die mit einer Sensoreinheit (3) aufgenommen werden, wobei
- nach Detektion eines Gegenstands im Aufnahmebereich der Sensoreinheit (3) das aufgenommene Digitalbild des Gegenstands als sequentielles Signal am Ausgang der Sensoreinheit ausgegeben wird,
**dadurch gekennzeichnet, dass**
- vor Beginn des Verfahrens eine Anzahl von Fenstern (11, 12, 13, 14) in Bezug auf den jeweiligen Gegenstand vorgegeben wird,
- der Zeilenwert (x) und der Spaltenwert (y) der übermittelten Bilddaten in Bezug auf das Digitalbild ermittelt werden,
- ermittelt und überprüft wird, ob sich der durch den Zeilenwert (x) und den Spaltenwert (y) festgelegte Bildpunkt (P) innerhalb eines oder mehrerer der vorgegebenen Fenster (11, 12, 13, 14) befindet,
- abhängig vom jeweiligen Fenster, in dem sich der jeweilige Bildpunkt (P) befindet, ein vorgegebener Satz von Gewichten (wr, wg, wb), gegebenenfalls auch ein Offset (offs), herangezogen wird und ein Mischwert (s) als mit den Gewichten gewichtete Summe der einlangenden Intensitätswerte der Bildkanäle (r, g, b) gebildet wird, und
- für alle Bildpunkte (P) innerhalb der Fenster (11, 12, 13, 14) die ermittelten gewichteten Mischwerte (s) abgespeichert und zur weiteren Verarbeitung zur Verfügung gehalten werden.

2. Verfahren gemäß Anspruch 1, **dadurch gekennzeichnet, dass** unter den vorliegenden Fenstern (11, 12, 13, 14) eine Priorisierung vorgegeben wird und bei Vorliegen eines Bildpunkts (P; P'), der sich innerhalb des Überlappungsbereichs zweier Fenster (11, 12) befindet, jener Satz von Gewichten (wr, wg, wb) herangezogen wird, der demjenigen Fenster (11, 12) zugeordnet ist, das die höhere Priorität im Sinne der zuvor vorgegebenen Priorisierung aufweist.

3. Verfahren gemäß Anspruch 2, **dadurch gekennzeichnet, dass** für jedes der Fenster (11, 12, 13, 14) ein Speicherbereich in einem Speicher (38) reserviert wird und jeweils ein Zeiger auf den Anfang des Speicherbereichs gesetzt wird, der Zeiger desjenigen Fensters ausgewählt wird, das die höhere Priorität im Sinne der vorgegebenen Priorisierung aufweist, und der Mischwert (s) an der Stelle des ausgewählten Zeigers abgespeichert wird.

4. Verfahren nach Anspruch 3, **dadurch gekennzeichnet, dass** eine Anzahl von periodisch wiederkehrenden Takten zum Auslesen des Speichers (38) durch nachgeschaltete Einheiten freigeschaltet wird und in den übrigen Takten der Speicher (38) beschrieben wird, wobei gegebenenfalls Mischwerte (s), die während der Freischaltung zum Lesen aufgenommen worden sind, zwischengespeichert und im darauffolgenden Takt in den Speicher geschrieben werden.

5. Verfahren gemäß einem der vorangehenden Ansprüche, **dadurch gekennzeichnet, dass** der gewichtete Mischwert (s) mit der Formel s = offs + w_{R+}r + w_{G+}g + w_{b+}b ermittelt wird.

6. Verfahren gemäß einem der vorangehenden Ansprüche, **dadurch gekennzeichnet, dass** ein Druckwerk aufgenommen wird und mit den aufgenommenen Daten das Digitalbild erstellt wird, wobei gegebenenfalls in einem Vorverarbeitungsschritt die Art des Druckwerks erkannt wird und abhängig von der Art des Druckwerks die Position der Fenster bzw. die den Fenstern zugeordneten Gewichte und Offset der Bildkanäle gesetzt werden.

7. Verfahren gemäß einem der vorangehenden Ansprüche, **dadurch gekennzeichnet, dass** die Form der Fenster rechteckig vorgegeben wird oder dass für jedes Fenster die vom Fenster umfassten Pixel, beispielsweise als Liste, vorgegeben werden.

8. Vorrichtung zur Reduktion von aufgezeichneten Bilddaten mit mehreren Bildkanälen von zu prüfenden Gegenständen, die mit einer Sensoreinheit (3) aufgenommen werden, wobei die Gegenstände an der Sensoreinheit (3) vorbeibewegt werden, und die Bilddaten sequentiell am Ausgang der Sensoreinheit (3) vorliegen,
wobei für jeden aufgenommenen Bildpunkt mehrere Intensitätswerte oder Farbwerte (r, g, b) für unterschiedliche Wellenlängenbereiche in jeweils einem Bildkanal vorliegen **dadurch gekennzeichnet, dass**
- der Ausgang der Sensoreinheit einer Positionserkennungseinheit (31) zugeführt ist, an deren Ausgang die Bildposition umfassend einen Zeilenwert (x) und einen Spaltenwert (y) der am Eingang anliegenden Bilddaten vorliegt,
- die Vorrichtung einen Fenstergrenzenspeicher umfasst, der die Fenstergrenzen von vordefinierten Fenstern (11, 12, 13, 14) innerhalb des aufzuzeichnenden Bilds in elektronischer Form abgespeichert enthält,
- die im Fenstergrenzenspeicher abgespeicherten Fenstergrenzen jeweils eines Fensters (11, 12, 13, 14) sowie die am Ausgang der Positionserkennungseinheit (32) anliegenden Positionsdaten jeweils einer einem Fenster (11, 12, 13, 14) zugeordneten Fenstereinheit (32) zugeführt sind,
- die Fenstereinheiten (32) überprüfen, ob die durch die Positionsdaten festgelegte Bildposition innerhalb der jeweiligen Fenstergrenzen des jeweiligen Fensters (11, 12, 13,14) liegt,
- die Vorrichtung einen Gewichtsspeicher (34) umfasst, in dem für jedes der Fenster sowie für jeden Bildkanal von Farbwerten (r, g, b) ein Gewicht und gegebenenfalls noch ein konstanter Offset (offs) abgespeichert ist, und
- die Vorrichtung eine Gewichtungseinheit (35) umfasst, der die Gewichte desjenigen Fensters zugeführt sind, innerhalb dessen sich die festgestellte Bildposition befindet, zugeführt sind, wobei
- der Gewichtungseinheit (35) die Kanäle von Farbwerten (r, g, b) zugeführt sind,
- am Ausgang der Gewichtungseinheit (35) ein gewichteter Mischwert (s) anliegt,
- der Gewichtungseinheit (35) ein Speicher (37) nachgeschaltet ist.

9. Vorrichtung gemäß Anspruch 8, **dadurch gekennzeichnet, dass**
- die Vorrichtung eine Priorisierungseinheit (33) umfasst, der sämtliche Ausgänge der Fenstereinheiten (32) zugeführt sind, wobei den vorliegenden Fenstern (11, 12, 13, 14) eine vorgegebene Priorisierung zugeordnet ist,
- ein Fenstersignal am Ausgang der Priorisierungseinheit (33) anliegt, das eine Kennung für das Fensters (11, 12, 13,14) mit der höchsten Priorität unter den Fenstern, innerhalb deren sich die Bildposition befindet, enthält,
- der Ausgang der Priorisierungseinheit (33) zum Gewichtsspeicher (34) geführt ist, und
- am Ausgang des Gewichtsspeichers (34) die Gewichte desjenigen Fensters anliegen, das durch die Priorisierungseinheit (33) vorgegeben ist.

10. Vorrichtung gemäß Anspruch 8 oder 9, **dadurch gekennzeichnet, dass** zwischen der Gewichtungseinheit (35) und dem Speicher (37) eine Abitrierungseinheit (36) zwischengeschaltet ist,
- den Fenstereinheiten (32) ein Adressspeicher (38) nachgeschaltet ist, der für jedes Fenster einen Zeiger abspeichert und bei Vorliegen eines Fenstersignals an der Fenstereinheit (32) den in ihm abgespeicherten dem jeweiligen Fenster zugeordneten Zeiger inkrementiert, wobei am Ausgang des Adressspeichers (38) die abgespeicherten den einzelnen Fenstern zugeordneten Zeiger anliegen,
dem Adressspeicher (38) ein Multiplexer (39) nachgeschaltet ist, der mit dem von der Priorisierungseinheit (33) erzeugten Priorisierungssignal gesteuert ist und den Zeiger an seinen Ausgang weiterleitet, dessen zugehöriges Fenster von der Priorisierungseinheit (33) ausgewählt worden ist, und
- wobei der Ausgang des Multiplexers (39) der Arbitrierungseinheit (36) zugeführt ist,
- eine Steuereinheit (40) vorgesehen ist, die der Arbitrierungseinheit (36) vorgeschaltet ist, wobei die Steuereinheit (40) ein periodisches Signal abgibt, mittels dessen sie Arbitrierungseinheit (36) in periodisch wiederkehrenden Takten in einen Schreibzustand sowie einen Lesezustand bringt,
- wobei die Arbitrierungseinheit (36) im Schreibzustand die am Ausgang der Gewichtungseinheit (35) anliegenden Mischwerte (s) auf diejenige Adresse des Speichers (37) schreibt, die durch die am Ausgang des Multiplexers (39) anliegenden Adressdaten festgelegt ist,
- im Lesezustand einen Zugriff von externen Einheiten auf den Speicher (37) ermöglicht, und
- die anliegenden Mischwerte (s) gegebenenfalls zwischenspeichert und in einem darauffolgenden Takt im Speicher (37) ablegt.

11. Datenträger auf dem ein Programm zur Durchführung eines Verfahrens gemäß einem der Ansprüche 1 bis 7 abgespeichert ist.

12. Computerprogramm mit Programmcode-Mitteln eingerichtet zur Durchführung eines Verfahrens nach einem der Ansprüche 1 bis 7, wenn das Programm auf einem Computer ausgeführt wird,

13. Computerprogramm nach Anspruch 12, gespeichert auf einem Datenträger.

14. Datenträger mit elektronisch auslesbaren Steuersignalen, die so mit einem programmierbaren Computersystem zusammenwirken können, dass ein Verfahren nach einem der Ansprüche 1 bis 7 ausgeführt wird.

15. Computerprogrammprodukt mit Programmcode zur Ausführung des Verfahrens nach einem der Ansprüche 1 bis 7, wenn das Programm auf einem Computer ausgeführt wird.

## Claims

1. A method for compressing the recorded image data of a digital image having a plurality of image channels of objects to be tested, which are captured by a sensor unit (3), wherein
- after detection of an object in the recording area of the sensor unit (3) the captured digital image of the object is emitted as a sequential signal at the output of the sensor unit,
**characterised in that**
- before the start of the method a number of windows (11, 12, 13, 14) is predefined in relation to the relevant object,
- the row value (x) and the column value (y) of the transmitted image data are calculated in relation to the digital image,
- it is calculated and checked whether the pixel (P) determined by the row value (x) and the column value (y) is located within one or a plurality of the predefined windows (11, 12, 13, 14),
- depending on the relevant window, in which the respective pixel is located (P), a predefined set of weights (wr, wg, wb), possibly also an offset (offs), is used and a mixed value (s) as the sum being weighted with the weights of the incoming intensity values of the image channels (r, g, b) is formed, and
- for all pixels (P) within the windows (11, 12, 13, 14) the determined weighted mixed values (s) are saved and made available for further processing.

2. The method according to claim 1, **characterised in that** beneath the existing windows (11, 12, 13, 14) a prioritisation is predefined and where a pixel (P; P') exists, being located within the overlap area of two windows (11, 12), the set of weights (wr, wg, wb) is used, which is assigned to the window (11, 12) having the higher priority in terms of the previously predefined prioritisation.

3. The method according to claim 2, **characterised in that** for each of the windows (11, 12, 13, 14) a storage area is reserved in a memory (38) and an indicator is set respectively to the start of the storage area, the indicator being selected of the window having the higher priority in terms of the predefined prioritisation, and the mixed value (s) is saved to the location of the selected pointer.

4. The method according to claim 3, **characterised in that** a number of periodically recurring cycles is activated to read out the memory (38) by means of downstream units and is described in the remaining cycles of the memory (38), wherein mixed values (s), which were captured for reading during the activation, are buffered and written into the subsequent cycle in the memory.

5. The method according to one of the previous claims, **characterised in that** the weighted mixed value (s) is calculated with the formula s = offs + w_{R+}r + w_{G+}g + w_{b+}b.

6. The method according to one of the preceding claims, **characterised in that** a printing unit is captured and with the captured data the digital image is created, wherein possibly in a preprocessing step the type of printing unit is recognised and the position of the window or the weights assigned to the windows and offset of the image channels are set depending on the type of printing unit.

7. The method according to one of the preceding claims, **characterised in that** the form of the window is predefined to be rectangular or that for each window the pixels included by the window, for example as a list, are predefined.

8. A device for compressing the recorded image data having a plurality of image channels of objects to be tested, which are captured by a sensor unit (3), wherein the objects on the sensor unit (3) are moved past, and the image data exists sequentially at the output of the sensor unit (3),
wherein for each captured pixel a plurality of intensity values or colour values (r, g, b) exist for various wavelength ranges each in an image channel,
**characterised in that**
- the output of the sensor unit is supplied to a position recognition unit (31), at whose output the image position exists comprising a row value (x) and a column value (y) of the image data abutting at the input,
- the device comprises a window limit memory, which contains the window limits of predefined windows (11, 12, 13, 14) within the image to be captured being stored in the electronic format,
- the window limits stored in the window limit memory of each window (11, 12, 13, 14) and the position data abutting at the outlet of the position recognition unit (32) are each supplied to a window unit (32) being assigned to a window (11, 12, 13, 14),
- the window units (32) check whether the image position determined by the position data is within the relevant window limits of the relevant window (11, 12, 13, 14),
- the device comprises a weight memory (34), in which for each of the windows and for each image channel of colour values (r, g, b) a weight and possibly a constant offset (offs) is stored, and
- the device comprises a weighting unit (35), to which the weights are supplied of the window, within which the determined image position is located, are supplied wherein
- the channels of the colour values (r, g, b) are supplied to the weighting unit (35),
- at the outlet of the weighting unit (35) a weighted mixed value (s) abuts,
- a memory (37) is downstream of the weighting unit (35).

9. The device according to claim 8, **characterised in that**
- the device comprises a prioritisation unit (33), to which all outlets of the window units (32) are supplied, wherein a predefined prioritisation is assigned to the existing windows (11, 12,13, 14),
- a window signal exists at the outlet of the prioritisation unit (33), which contains an identifier for the window (11, 12, 13, 14) with the highest priority of the windows, within which the image position is located,
- the outlet of the prioritisation unit (33) is supplied to the weight memory (34), and
- at the outlet of the weight memory (34) the weights of the window being predefined by the prioritisation unit (33) abut.

10. The device according to claim 8 or 9, **characterised in that** between the weighting unit (35) and the memory (37) an arbitration unit (36) is interconnected,
- an address memory (38) is downstream of the window units (32), said address memory storing an indicator for each window and upon the existence of a window signal on the window unit (32) the indicator allocated to the relevant window being saved in it increments, wherein the saved indicators assigned to the individual windows abut at the output of the address memory (38),
a multiplexer (39) is downstream of the address memory (38), said multiplexer being controlled with the prioritisation signal produced by the prioritisation unit (33) and being forwarded to the indicator at its outlet, whose assigned window has been selected by the prioritisation signal (33), and
- wherein the output of the multiplexer (39) is supplied to the arbitration unit (36),
- a control unit (40) is provided being upstream of the arbitration unit (36), wherein the control unit (40) emits a periodic signal, by means of which it brings the arbitration unit (36) in periodically recurring cycles into a write mode and a read mode,
- wherein the arbitration unit (36) in the write mode writes the mixed values (s) abutting the output of the weighting unit (35) at the address of the memory (37) that is determined by the address data abutting at the output of the multiplexer (39),
- in the read state facilitates access by external units to the memory (37), and
- buffers the abutting mixed values (s) where applicable and archives them in a subsequent cycle in the memory (37).

11. A data carrier on which a programme to execute a method according to one of claims 1 to 7 is saved.

12. A computer programme with programming code means, set up to execute a method according to one of claims 1 to 7 where the programme is run on a computer.

13. The computer programme according to claim 12, saved on a data carrier.

14. A data carrier with electronically readable control signals, which can interact with a programmable computer system such that a method according to one of claims 1 to 7 is executed.

15. A computer programme product with programming code for executing the method according to one of claims 1 to 7 where the programme is run on a computer.

## Revendications

1. Procédé de réduction de données d'images enregistrées d'une image numérique avec plusieurs canaux d'images d'objets à vérifier, qui sont capturées avec une unité de capteur (3), dans lequel
- après la détection d'un objet dans la zone de prise de vue de l'unité de capteur (3), l'image numérique capturée de l'objet est émise sous la forme d'un signal séquentiel au niveau de la sortie de l'unité de capteur,
**caractérisé en ce**
- **qu'**avant le début du procédé, un certain nombre de fenêtre (11, 12, 13, 14) est prédéfini par rapport à l'objet respectif,
- la valeur de ligne (x) et la valeur de colonne (y) des données d'images transmises sont déterminées par rapport à l'image numérique,
- il est déterminé et vérifié si le point d'image (P) défini par le biais de la valeur de ligne (x) et de la valeur de colonne (y) se trouve à l'intérieur d'une ou de plusieurs des fenêtres prédéfinies (11, 12, 13, 14),
- en fonction de la fenêtre respective, dans laquelle le point d'image respectif (P) se trouve, un jeu prédéfini de poids (wr, wg, wb), le cas échéant également un décalage (offs), sont extraits et une valeur combinée (s) est formée sous forme de somme pondérée par les poids des valeurs d'intensité reçues des canaux d'images (r, g, b) et
- pour tous les points d'image (P) à l'intérieur de la fenêtre (11, 12, 13, 14), la valeur combinée (s) pondérée déterminée est mémorisée et placée à disposition pour traitement ultérieur.

2. Procédé selon la revendication 1, **caractérisé en ce que**, parmi les fenêtres présentes (11, 12, 13, 14), un ordre de priorité est prédéfini et, lorsqu'un point d'image (P ; P') présent se trouve à l'intérieur de la zone de chevauchement de deux fenêtres (11, 12), le jeu de poids (wr, wg, wb) qui est attribué à la fenêtre respective (11,12) et qui présente la priorité la plus élevée conformément à l'ordre de priorité prédéfini, est extrait.

3. Procédé selon la revendication 2, **caractérisé en ce que**, pour chaque fenêtre (11, 12, 13, 14), une zone de stockage est réservée dans une mémoire (38) et un pointeur est respectivement placé au début de la zone de mémoire, le pointeur de la fenêtre respective est sélectionné, qui présente la priorité la plus élevée conformément à l'ordre de priorité prédéfini et la valeur combinée (s) est mémorisée à l'endroit du pointeur sélectionné.

4. Procédé selon la revendication 3, **caractérisé en ce qu'**un certain nombre d'instants périodiquement récurrents sont activés pour la lecture de la mémoire (38) par le biais d'unité en aval et pour l'écriture dans le reste des mesures de la mémoire (38), dans lequel, le cas échéant, la valeur combinée (s) qui a été capturée pendant l'activation pour lecture est mémorisée de manière intermédiaire et écrite dans l'instant suivant dans la mémoire.

5. Procédé selon une des revendications précédentes, **caractérisé en ce que** la valeur combinée (s) pondérée est déterminée par la formule s = offs + w_{R+}r + w_{G+}g + w_{b+}b.

6. Procédé selon une des revendications précédentes, **caractérisé en ce qu'**une valeur de pression est capturée et l'image numérique est créée avec les données capturées, dans lequel, le cas échéant, dans une étape de pré-traitement, le type de la valeur de pression est reconnu et, en fonction du type de la valeur de pression, la position de la fenêtre ou des poids attribués aux fenêtres et le décalage des canaux d'image sont fixés.

7. Procédé selon une des revendications précédentes, **caractérisé en ce que** la forme de la fenêtre est prédéfinie comme étant rectangulaire ou **en ce que**, pour chaque fenêtre, les pixels compris dans la fenêtre sont prédéfinis, par exemple sous forme de liste.

8. Dispositif de réduction de données d'images enregistrées avec plusieurs canaux d'images d'objets à vérifier, qui sont capturées avec une unité de capteur (3), dans lequel les objets sont amenés à passer devant l'unité de capteur (3) et les données d'images sont présentes de manière séquentielle au niveau de la sortie de l'unité de capteur (3),
dans lequel, pour chaque point d'image capturé, plusieurs valeurs d'intensité ou valeurs de couleur (r, g, b) sont présentes pour des zones de longueurs d'ondes différentes dans un canal d'image, respectivement
**caractérisé en ce**
- **que** la sortie de l'unité de capteur est transférée à une unité de reconnaissance de position (31), à la sortie de laquelle la position d'image comprenant une valeur de ligne (x) et une valeur de colonne (y) des données d'images présentes à l'entrée,
- le dispositif comprend une mémoire de limites de fenêtres, qui contient les limites de fenêtres de fenêtres prédéfinies (11, 12, 13, 14) à l'intérieur de l'image à enregistrer, sous forme électronique,
- les limites de fenêtres, enregistrées dans la mémoire de limites de fenêtres, d'une fenêtre respective (11, 12, 13, 14), ainsi que les données de position présentes à la sortie de l'unité de reconnaissance de position (32) sont respectivement transférées à une unité de fenêtre (32) attribuée à une fenêtre(11, 12, 13, 14),
- les unités de fenêtre (32) vérifient si la position d'image déterminée par le biais des données de position se trouve à l'intérieur des limites de fenêtres respectives de la fenêtre respective (11, 12, 13, 14),
- le dispositif comprend une mémoire de poids (34), dans laquelle, pour chacune des fenêtres, ainsi que pour chaque canal d'image de valeurs de couleur (r, g, b), un poids et le cas échéant également un décalage constant (offs) sont mémorisés et
- le dispositif comprend une unité de pondération (35), à laquelle sont transférés les poids des fenêtres à l'intérieur desquelles la position d'image déterminée se trouve, dans lequel
- les canaux des valeurs de couleur (r, g, b) sont transférés à l'unité de pondération (35),
- une valeur combinée (s) pondérée se trouve à la sortie de l'unité de pondération (35),
- une mémoire (37) est connectée en aval de l'unité de pondération (35).

9. Dispositif selon la revendication 8, **caractérisé en ce**
- **que** le dispositif comprend une unité d'établissement d'ordre de priorité (33), à laquelle l'ensemble des sorties des unités de fenêtres (32) sont transférées, dans lequel un ordre de priorité prédéfini est attribué aux fenêtres présentes (11, 12, 13, 14),
- un signal de fenêtre est présent à la sortie de l'unité d'établissement d'ordre de priorité (33), qui contient un identifiant pour la fenêtre (11, 12, 13, 14) avec la priorité la plus élevée parmi les fenêtres à l'intérieur desquelles la position d'image se trouve,
- la sortie de l'unité d'établissement d'ordre de priorité (33) est transférée à la mémoire de poids (34) et
- au niveau de la sortie de la mémoire de poids (34) se trouvent les poids de la fenêtre prédéfinie par l'unité d'établissement d'ordre de priorité (33).

10. Dispositif selon la revendication 8 ou 9, **caractérisé en ce que**, entre l'unité de pondération (35) et la mémoire (37) est connectée de façon intermédiaire une unité d'arbitrage (36),
- une mémoire d'adresse (38) est connectée en aval des unités de fenêtres (32), qui mémorise un pointeur pour chaque fenêtre et qui, lorsqu'un signal de fenêtre est présent sur l'unité de fenêtre (32), incrémente le pointeur attribué à la fenêtre respective qui est mémorisé dans celle-ci, dans lequel les pointeurs mémorisés attribués aux fenêtres individuelles se trouvent à la sortie de la mémoire d'adresses (38),
un multiplexeur (39) est connecté en aval de la mémoire d'adresse (38), qui est commandé par le signal de priorité produit par l'unité d'établissement d'ordre de priorité (33) et qui communique le pointeur au niveau de sa sortie, dont la fenêtre associée a été sélectionnée par l'unité d'établissement d'ordre de priorité (33) et
- dans lequel la sortie du multiplexeur (39) est transférée à l'unité d'arbitrage (36),
- une unité de commande (40) est prévue, qui est connectée en amont de l'unité d'arbitrage (36), dans lequel l'unité de commande (40) émet un signal périodique, au moyen duquel elle amène l'unité d'arbitrage (36) à des instants périodiquement récurrents, dans un état d'écriture ainsi que dans un état de lecture,
- dans lequel l'unité d'arbitrage (36) dans l'état d'écriture écrit la valeur combinée (s) présente à la sortie de l'unité de pondération (35) sur l'adresse de la mémoire (37) définie par les données d'adresse se trouvant à la sortie du multiplexeur (39),
- dans l'état de lecture, des unités externes peuvent avoir accès à la mémoire (37) et
- la valeur combinée (s) présente est le cas échéant mémorisée de façon intermédiaire et ensuite placée dans la mémoire (37) à l'instant suivant.

11. Support de données sur lequel est mémorisé un programme pour la réalisation du procédé selon une des revendications 1 à 7.

12. Programme informatique comprenant des moyens de code de programme destinés à la réalisation d'un procédé selon une des revendications 1 à 7 lorsque le programme est réalisé sur un ordinateur.

13. Programme informatique selon la revendication 12 mémorisé sur un support de données.

14. Support de données comprenant des signaux de commande lisibles par voie électronique, qui peuvent entraîner, avec un système informatique programmable, la réalisation d'un procédé selon une des revendications 1 à 7.

15. Produit de programme informatique comprenant un code de programme destiné à la réalisation d'un procédé selon une des revendications 1 à 7 lorsque le programme est réalisé sur un ordinateur.
